# EUROPEAN PATENT APPLICATION

(11) **EP 1 936 483 A1**
(43) Date of publication of application: **25.06.2008**
(21) Application number: 06127015.3
(22) Date of filing: 22.12.2006
(51) Int. Cl.: G06F 3/048

(54) **System and method for switching between running application programs on handheld devices**

(71) Applicant: Research In Motion Limited, Waterloo, Ontario N2L 3W8 (CA)
(72) Inventor: Bocking, Andrew, Waterloo Ontario N2K 3Y8 (CA)
(74) Representative: Patel, Binesh

(57) **Abstract**

A handheld device has a memory for storing a plurality of software applications and a processor for running concurrently at least two of the applications, a one of them defining an active application. First and second buttons on the device are adapted to advance a one of the running applications to the active application. According to a method, (which may be configured by code in each of at least some of the software applications), the processor is configured to display a first menu in response to an input from the first button where the first menu has at least one menu item for prompting a user to a second menu showing a list of running applications. The processor is further configured to navigate the menus in response to input from the second button and advance to the active application a one of the running applications selected from the second menu.

## Description

### BACKGROUND

This matter relates to the field of mobile handheld devices optimised to allow users to input data with a minimal number of keystrokes and for use substantially with the thumbs. In particular the matter relates to a system and method for providing users of these handheld devices with the ability to switch to one of a plurality of running application programs using a minimal number of keystrokes.

In desktop computer systems, user input is usually received via a combination of a QWERTY keyboard and a mouse. Multitasking operating systems provide a mechanism for allowing a user to change to a different running program within the operating system. For example, the Windows(^{™}) operating system accepts a series of predefined keystrokes (or clicks) that must be issued by a user. Some versions of Windows(^{™}) allow a user to click on an appropriate taskbar button to bring a desired running application to the forefront. The taskbar may remain visible to the user on the screen at all times. In a handheld device screen real estate is limited hence this solution is not practical.

Another option available to the user in the Windows(^{™}) environment is to press the ALT+TAB keys together to display, on demand, a small icon list (horizontal row) of running applications, and choose the desired application by multiple ALT+TAB stroke sequences. A boxed (or highlighted) icon in the list is the one under consideration. Each ALT-TAB stroke sequence moves the box one icon to the right. Alternatively the user can bring up a task manager application by pressing the CTRL-ALT-DEL keys together, choose the "Applications" tab, and double click on any running application in the list to bring that application to the active position at the front of the screen.

Most mobile handheld devices also run multitasking operating systems to allow a user to run different application programs at once. The operating systems also provide similar key combinations that must be depressed together to activate a list and cycle between the running applications. However a number of these devices have a keyboard layout optimised for thumb manipulation. To encourage data entry using thumbs and to minimize the number of keys on the keyboard, these devices also include a thumb-wheel for control of menus, for selection of forms and functions relevant to data input. The thumb-wheel is positioned in close proximity to the keyboard to enable the user to easily transition from thumb-based typing to thumb control of functions. For example handheld devices, such as the BlackBerry (^{™}) allow a user to simultaneously press the ALT+ESC keys using respective thumbs to cyclically progress through all running applications Requiring the depression of two keys together can be quite burdensome, particularly in situations where the user has one hand occupied, such as, when talking on a telephone while wanting to switch between applications such as an email and calendar application on their handheld device.

Some handheld devices provide dedicated keys for switching between applications, however since space is limited, this solution is an inefficient use of space and not easily implemented across different devices.

Accordingly there is a need for a system and method for advancing a running application program to an active position on handheld devices, which mitigates at least some of the above disadvantages.

### SUMMARY

An advantage of the present matter is that it provides a selection menu (e.g. a window) for advancing available running applications to active requiring few user keystrokes (or clicks) and it is particularly adapted to handheld devices.

The present matter seeks to provide a user interface (UI) in conjunction with a keyboard input on a handheld device that allows users to switch between running applications using a minimal number of key strokes and preferably allowing single-handed operation by the user.

A further advantage of the present matter is that it may be applied to many devices without requiring the use of dedicated keys.

In accordance with this matter there is provided a handheld device for advancing running application programs to an active status, the device comprising a first button operable to cause the device to display a first menu, the first menu comprising at least one menu item for prompting the user to an advance application menu, the advance application menu showing a list of running applications; and a second button operable to allow a user to navigate said menus; and said first button is further operable to select an application from said list of running applications to advance to active status.

In accordance with another aspect of the matter there is provided a method for advancing running application programs to an active status in a handheld device, the method comprising displaying a first menu in response to an input from a first button, the first menu comprising at least one menu item for prompting the user to a second menu, the second menu showing a list of running applications; and advancing from the list of running applications to active status an application selected from the second menu. The method may further comprise navigating the menus in response to input from a second button.

Further in accordance with this matter there is provided a computer program product comprising computer readable code embodied therein which when executed by a processor adapts a handheld device to advance a running application to active status, said code adapting the processor to: display a first menu in response to an input from a first button, the first menu comprising at least one menu item for prompting the user to a second menu, the second menu showing a list of running applications; and advance from the list of running applications to active status an application selected from the second menu.

### BRIEF DESCRIPTION OF THE DRAWINGS

Embodiments of the present matter will now be described, by way of example only, with reference to the attached figures, wherein:

FIG. 1 is a block diagram of a mobile electronic device and a communications system to which embodiments of the present matter may be applied;

FIG. 2 is a front view of a mobile electronic device to which embodiments of the present matter may be applied; and

FIG. 3 is a flowchart for a method for a user interface in accordance with an embodiment of the present matter.

DETAILED DESCRIPTION

In the following description and drawings like reference numerals refer to similar elements and features.

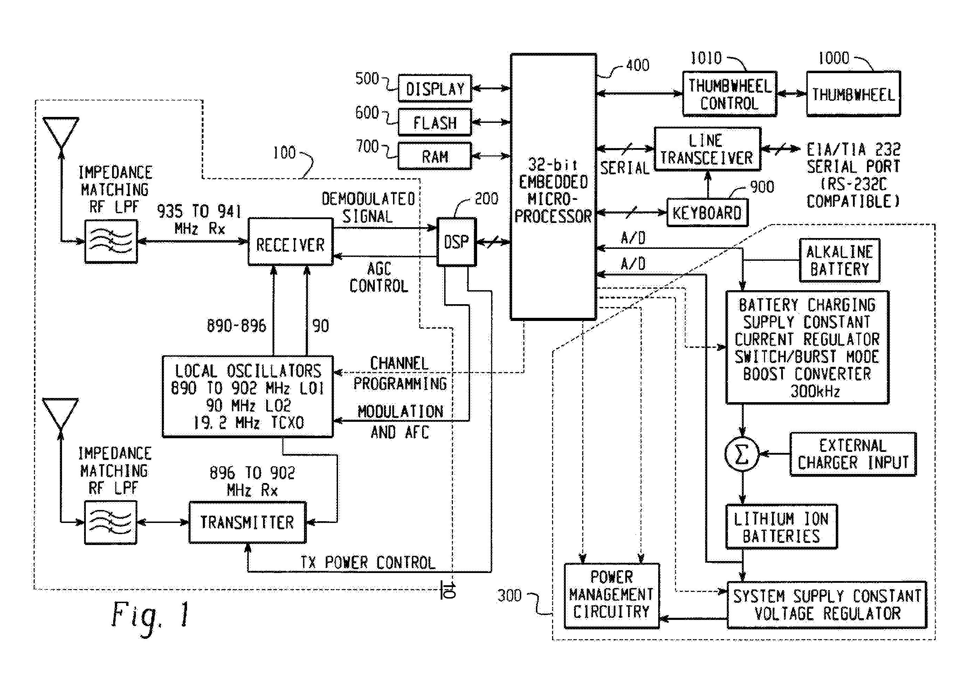

Referring now to, FIG. 1 there is shown a block diagram of the major subsystems and elements comprising a palm-sized, mobile, two-way messaging device 10 that preferably incorporates the embodiments of the present matter. In its broadest terms, the messaging device includes a transmitter/receiver subsystem 100 connected to a DSP 200 for digital signal processing of the incoming and outgoing data transmissions, power supply and management subsystem 300, which supplies and manages power to the overall messaging device components, microprocessor 400, which is preferably an X86 architecture processor, that controls the operation of the messaging device, display 500, which is preferably a full graphic LCD, FLASH memory 600, RAM 700, serial output and port 800, keyboard 900, thumbwheel 1000 and thumbwheel control logic 1010. In its intended use, a message comes via a wireless data network, such as the Mobitex network, into subsystem 100, where it is demodulated via DSP 200 and decoded and presented to microprocessor 400 for display on display 500. Other wireless data networks may also be used such as iDEN, GPRS/GSM 1x, etc.

To access the display of the message, the user may choose from functions listed under a menu presented as a result of user interaction with thumbwheel 1000. If the message is an email message, the user may chose to respond to the email by selecting "Reply" from a menu presented on the display through interaction via thumbwheel 1000 or via menu selection from keyboard 900. In typing the reply, the user can use keyboard 900 to type full text Message replies, or insert predetermined or "canned" response by using either a particular keystroke pattern or through pulling down predetermined text strings from a menu of items presented on display 500 through the use of thumbwheel 1000. When the reply to the message is composed, the user can initiate the sending of the message preferably by interaction through thumbwheel 1000, or alternatively, with less efficiency, through a combination of keyboard 900 keystrokes.

When the microprocessor 400 receives an indication that the message is to be sent, it processes the message for transport and, by directing and communicating with transmitter/receiver subsystem 100, enables the reply message to be sent via the wireless communications date network to the intended recipient. Similar interaction through I/O devices (e.g. keyboard 900 and thumbwheel 1000) can be used to initiate full-text messages or to forward messages to another party.

Also, the keyboard 900 and thumbwheel 1000 can be used to permit data entry to an address book resident on the messaging device, or an electronic calendar or log book, or any other function on the messaging device requiring data entry. Preferably, the thumbwheel is of a type that includes a push button switch.

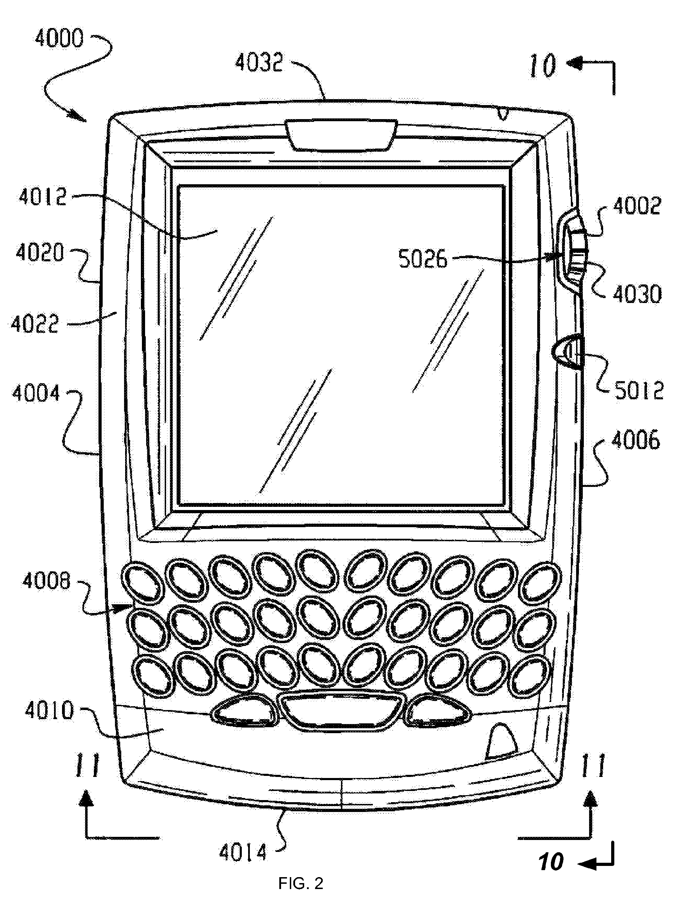

Referring to FIG. 2 there is shown a front view of a housing 4000 for example handheld device 10 that incorporates the invention. The device 10 is shown in the ordinary operating/viewing position in which it would be held by and between the user's left and right hands at the left and right side edges 4004 and 4006 of the device 4000. The keyboard 4008 is thus elongated horizontally across the front 4010 of the device 4000 at a location between the display 4012 and the lower edge 4014 of the device 4000. As described earlier the housing 4000 includes a microprocessor with a software application for providing a plurality of thumb-based operational features upon certain inputs from the keyboard 4008 and the thumbwheel 4002, as described above. Rolling the thumbwheel 4002 provides a scrolling/navigating function while depressing the thumbwheel switch 5026 serves an activation/selection function.

In general the device software provides a number of navigation aids for most user input tasks. The navigation aids maximize the likelihood that there will be a graphical interface that the user finds intuitive. The aids allow most input tasks to be performed completely using either the keyboard or the thumbwheel. The navigation aids are preferably incorporated into choice boxes and menus of the device software. A choice box is graphical interface wherein only one selection is displayed at one time. The other possible selections are displayed one at a time by a navigation means. A menu, on the other hand, is a graphical interface wherein a multiplicity of all selections (menu items) for a particular input are displayed at one time.

The thumbwheel 4002 can be used to move a cursor through the menu and through the list of menu items. For example, rotating the thumbwheel in a first direction, such as "down," can cause the cursor to scroll through the menu items in the menu, to permit a user to highlight a desired menu item. Thus, when the cursor is highlighting the first item, moving the thumbwheel in the first direction may cause the cursor to highlight another menu item, such as for example, an edit menu item. The items associated with the highlighted menu item may be displayed as discussed above.

Moving the thumbwheel in a second direction, such as "up" can cause the cursor to scroll through the displayed menu items in an opposite direction to enable a user to highlight a desired item.

A highlighted item can be executed by using the thumbwheel switch 5026. For example, by "pressing" the thumbwheel 4002, may cause the device to execute a highlighted item.

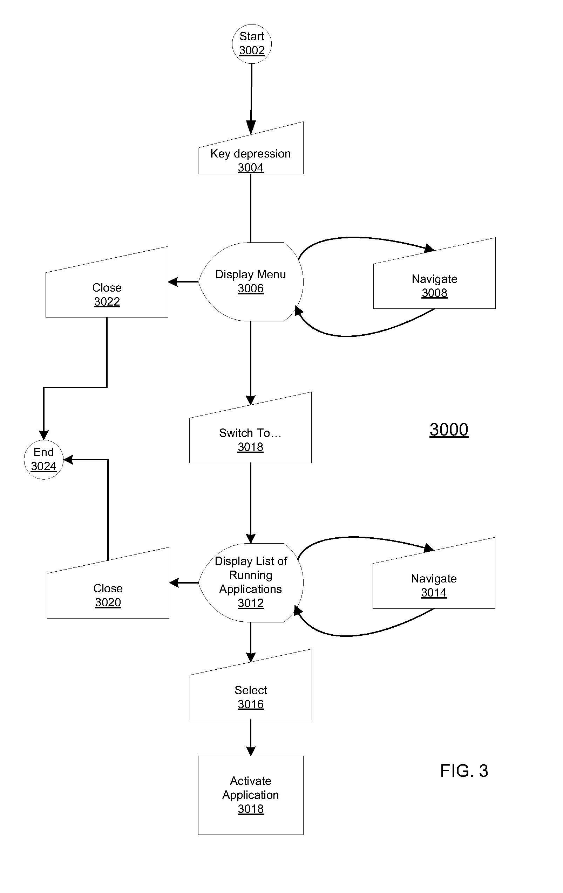

Referring now to FIG. 3, there is shown a flowchart that describes a method 3000 in accordance with an embodiment of the present matter for a user interface to a handheld device 10 for switching to a running application program. Beginning at start block 3002, operations 3000 commence. At step 3004 the user depresses the key for initiating display of the menu, such as by clicking the thumbwheel key or by using the keyboard or other auxiliary input device. At step 3006 a menu is displayed. It is noted that in some instances a menu may not be displayed as for example, if the user is in the device home display and no user applications are running. However, if for example there is currently being displayed on the device a GUI for an email application (not shown) then the menu includes at least a "Switch To.." menu item. The menu may include other items such as "Close", "Reply", "New" and such like depending on the particular application that is actively visible on the display. The user may navigate at step 3008 between the various menu items, using the scroll wheel of the thumbwheel or any other designated key. At step 3008, if the user scrolls to the "Switch To.." menu item and clicks the thumbwheel, a list of running applications is displayed at step 3012. The list of running applications can be displayed as icons or text or a combination thereof. At step 3014 the user can navigate to the desired running application and, at step 3016, select the application (e.g. by clicking the thumbwheel) to advance it to an active position on the device. A user may close the menu screen at step 3022 ending the menu screen display operation or close, at step 3020, the screen listing the running applications.

Though not shown, operations of determining which applications are currently running and processes for moving an application to active status on the display screen are well known and will not be discussed here.

Furthermore, the particular device to which the method of the present matter is applied will determine the format or appearance on the display of the menu and the menu items. The choice of input devices to initiate the display of the menu containing the "Switch To.." menu item will also be determined by the particular device to which the method of the present matter is to be applied. Most devices include a scroll mechanism that is operable by one hand. In a preferred embodiment a thumbwheel scroll mechanism is used to perform the input (selecting and navigation) operations of the present matter.

Thus in general then, there is described a handheld device having a memory for storing a plurality of software applications and a processor for running concurrently at least two of the applications, a one of the running applications defining an active application. First and second buttons on the device are adapted to advance a one of the running applications to the active application. According to a method aspect, (which may be configured by code in each of at least some of the software applications), the processor is configured to display a first menu in response to an input from the first button where the first menu has at least one menu item for prompting a user to a second menu showing a list of running applications. The processor is further configured to navigate the menus in response to input from the second button and advance to the active application a one of the running applications selected from the second menu. Persons of ordinary skill in the art will thus appreciate various aspects including device, computer program product and method aspects.

While certain features of the matter have been illustrated as described herein, many modifications, substitutions, changes and equivalents will now occur to those skilled in the art. It is, therefore, to be understood that the appended claims are intended to cover all such embodiments and changes as fall within the true spirit of the matter.

## Claims

1. A method for advancing running application programs to an active status in a handheld device (4000), said method comprising the steps of:
displaying a first menu (3006) in response to an input from a first button (4002, 5026), the first menu comprising at least one menu item (3018) for prompting the user to a second menu (3012), the second menu showing a list of running applications; and
advancing from said list of running applications to active status (3018) an application selected from the second menu (3016).

2. The method as defined in claim 1 comprising displaying said second menu (3012) in response to the selecting of the at least one menu item (3018) for prompting the user.

3. The method as defined in claim 2 wherein said selecting of the at least one menu item is responsive to input from the first button.

4. The method as defined in any one of claims 1 to 3 comprising navigating at least one of said first menu and said second menu (3008, 3014) in response to input from a second button (4002, 4030).

5. The method as defined in claim 4 comprising selecting the application from the list of running applications in response to input from the first button.

6. The method as defined in claim 5 wherein said first and second buttons comprising a clickable thumbwheel control (4002, 5026, 4030) and wherein said method comprises operating said clickable thumbwheel control using a thumb to provide each of said inputs.

7. A computer program product comprising computer readable code embodied therein which when executed by a processor (400) adapt a handheld device (4000) to advance a running application to active status, said code adapting the processor to perform a method in accordance with any one of claims 1 to 6.

8. A handheld device (4000) for advancing running application programs to an active status, the device comprising:
a first button (4002, 5026) operable to cause the device to display a first menu (3006), the first menu comprising at least one menu item (3018) for prompting the user to an advance application menu (3012), the advance application menu showing a list of running applications; and
a second button (4002,4030) operable to allow a user to navigate said menus; and
wherein said first button is further operable to select an application from said list of running applications to advance to active status.

9. A handheld device as defined in claim 8, said first and second buttons being operable by the user using one hand.

10. A handheld device as defined in any one of claim 8 and claim 9, said first and second buttons being operable by the user's thumb.

11. A handheld device as defined in any one of claims 8 to 10, said first and second buttons being a clickable thumbwheel control.

12. A handheld device as defined in any one of claims 8 to 11, wherein said first button is further operable to select the at least one menu item for prompting the user to cause the display of the advance application menu.
